# EUROPEAN PATENT APPLICATION

(11) **EP 4 513 705 A1**
(43) Date of publication of application: **26.02.2025**
(21) Application number: 22952564.7
(22) Date of filing: 29.07.2022
(51) Int. Cl.: H02J 3/38

(54) **PHOTOVOLTAIC POWER SUPPLY SYSTEM AND CONTROL METHOD THEREFOR**

(71) Applicant: Huawei Digital Power Technologies Co., Ltd., Shenzhen, Guangdong 518043 (CN)
(72) Inventor: WANG, Zhaohui, Shenzhen, Guangdong 518043 (CN); SHI, Lei, Shenzhen, Guangdong 518043 (CN); GAO, Yongbing, Shenzhen, Guangdong 518043 (CN)
(74) Representative: Maiwald GmbH
(86) International application number: PCT/CN2022/109241
(87) International publication number: WO 2024/021118

(57) **Abstract**

A photovoltaic power supply system and a control method thereof are provided. The photovoltaic power supply system includes a power supply, a collector, and a photovoltaic inverter. The photovoltaic inverter includes a controllable switch on a direct current side, an inverter unit, a controllable switch on an alternating current side, a first controller, and a second controller. The collector is configured to obtain a power supply parameter of the photovoltaic power supply system. The first controller is configured to: when the power supply parameter of the photovoltaic power supply system is greater than or equal to a power supply parameter threshold, turn off the controllable switch on the direct current side, to disconnect an electrical connection between a power supply and the inverter unit. The second controller is configured to: when the power supply parameter of the photovoltaic power supply system is greater than or equal to the power supply parameter threshold, turn off the controllable switch on the alternating current side, to disconnect an electrical connection between the inverter unit and a load. The photovoltaic power supply system may flexibly disconnect the electrical connection between a power supply and the inverter unit and/or the electrical connection between the inverter unit and the load when a fault occurs in the photovoltaic power supply system. This improves safety, reduces a quantity of switch groups, simplifies the photovoltaic power supply system, and reduces costs.

## Description

### TECHNICAL FIELD

This application relates to the field of power electronics technologies, and in particular, to a photovoltaic power supply system and a control method thereof.

### BACKGROUND

In the field of power electronics technologies, a photovoltaic power supply system usually transmits electric energy between a power supply and a load (for example, a power grid) through an inverter unit. When a fault occurs in the photovoltaic power supply system, a connection between the power supply and the load (for example, the power grid) needs to be disconnected (for example, a current between the power supply and the power grid is cut off), to ensure safety of troubleshooting personnel. A plurality of groups of controllable switches on an alternating current side (for example, relays) are usually included between the inverter unit and the load (for example, the power grid). The plurality of groups of controllable switches on the alternating current side are separately controlled by a plurality of different controllers. When one group of controllable switches on the alternating current side is faulty (for example, contact plates of the relays are bonded), a controller may control another group of controllable switches on the alternating current side to disconnect a connection between the inverter unit and the power grid. In a process of research and practice, the inventor of this application finds that, one level of a manual switch is usually added between the inverter unit and the power supply, to disconnect and connect an electrical connection between the power supply and the inverter unit. As a result, there are a large quantity of switch groups in the system, the system is complex, and costs are high.

### SUMMARY

This application provides a photovoltaic power supply system and a control method thereof, so that the photovoltaic power supply system may flexibly disconnect a connection between a power supply and an inverter unit and/or an electrical connection between the inverter unit and a load when a fault occurs in the photovoltaic power supply system. This improves safety of the photovoltaic power supply system, reduces a quantity of switch groups, simplifies the photovoltaic power supply system, and reduces costs.

According to a first aspect, this application provides a photovoltaic power supply system. The photovoltaic power supply system may include a power supply and a photovoltaic inverter. The photovoltaic inverter may include a controllable switch on a direct current side, an inverter unit, a controllable switch on an alternating current side, a collector, a first controller, and a second controller. The power supply herein may be connected to the inverter unit through the controllable switch on the direct current side. The inverter unit may be connected to a load through the controllable switch on the alternating current side. An input end of the collector may be connected between the inverter unit and the load, and/or the input end of the collector is connected between the inverter unit and the power supply. An output end of the collector may be connected to the first controller and the second controller. The first controller may be connected to the controllable switch on the direct current side. The second controller may be connected to the controllable switch on the alternating current side. The collector herein may be configured to obtain a power supply parameter of the photovoltaic power supply system. The first controller herein may be configured to: when the power supply parameter of the photovoltaic power supply system is greater than or equal to a power supply parameter threshold, turn off the controllable switch on the direct current side, to disconnect an electrical connection between the power supply and the inverter unit. The second controller herein may be configured to: when the power supply parameter of the photovoltaic power supply system is greater than or equal to the power supply parameter threshold, turn off the controllable switch on the alternating current side, to disconnect an electrical connection between the inverter unit and the load.

In an implementation provided in this application, the collector may obtain the power supply parameter of the photovoltaic power supply system. It may be understood that the collector may be integrated into the photovoltaic inverter, or may exist independently outside the photovoltaic inverter. A specific layout manner may be determined based on an actual application scenario. The power supply parameter herein of the photovoltaic power supply system may identify a working state of the photovoltaic power supply system. When the power supply parameter of the photovoltaic power supply system is greater than or equal to the power supply parameter threshold, it indicates that the photovoltaic power supply system is faulty or is in an abnormal working state. When the power supply parameter of the photovoltaic power supply system is greater than or equal to the power supply parameter threshold, the first controller may turn off the controllable switch on the direct current side, to disconnect the electrical connection between the power supply (for example, a photovoltaic panel) and the inverter unit. When the power supply parameter of the photovoltaic power supply system is greater than or equal to the power supply parameter threshold, the second controller may turn off the controllable switch on the alternating current side, to disconnect the electrical connection between the inverter unit and the load (for example, a power grid and/or an electric device). The controllable switch on the direct current side herein may be a direct current circuit breaker, a direct current isolator, a direct current contactor, or another controllable switch (for example, a partially controllable switch, or a fully controllable switch) applicable to a direct current circuit. The controllable switch on the alternating current side herein may be a relay or another controllable switch (for example, a partially controllable switch, or a fully controllable switch) applicable to an alternating current circuit. The partially controllable switch herein means a switch that may be turned off by the controller or a control circuit. The fully controllable switch herein means a switch that can be turned off or on by the controller or the control circuit. The controllable switch on the direct current side and the controllable switch on the alternating current side herein may be single switch devices, or may be switch circuits, or may be switch groups including a plurality of switch devices or a plurality of switch circuits. For example, the controllable switch on the direct current side (or the controllable switch on the alternating current side) may be formed by connecting one controllable switch to both a positive direct current terminal (or a positive alternating current terminal) and a negative direct current terminal (or a negative alternating current terminal) of the inverter unit. The controllable switch on the direct current side (or the controllable switch on the alternating current side) herein may be a switch group. The first controller (or the second controller) may control, by using different signals, any one or several switches of the controllable switch on the direct current side (or the controllable switch on the alternating current side) to be turned on or off.

In this application, the photovoltaic inverter may control, by using the controller, the controllable switch on the direct current side and the controllable switch on the alternating current side to be turned on or off. The photovoltaic inverter may flexibly disconnect the connection between the power supply and the inverter unit and/or the electrical connection between the inverter unit and the load when a fault occurs in the photovoltaic power supply system. This improves safety of the photovoltaic power supply system, reduces a quantity of switch groups, simplifies the photovoltaic power supply system, and reduces costs. In addition, the photovoltaic inverter may control both the controllable switch on the direct current side and the controllable switch on the alternating current side to be simultaneously turned off when a fault occurs in the photovoltaic power supply system. In this way, an electrical clearance distance (or a creepage distance) in the photovoltaic power supply system meets a safety distance in a safety standard, further improving safety of the photovoltaic power supply system.

With reference to the first aspect, in a first possible implementation, the power supply parameter may include an input current of the inverter unit, an output current of the inverter unit, an input voltage of the inverter unit, and/or an output voltage of the inverter unit. The power supply parameter threshold may include an input current threshold of the inverter unit, an output current threshold of the inverter unit, an input voltage threshold of the inverter unit, and/or an output voltage threshold of the inverter unit. The power supply parameter herein is diversified and flexible, and enriches an application scenario of the photovoltaic power supply system.

With reference to the first aspect or the first possible implementation of the first aspect, in a second possible implementation, the first controller may be further configured to: when the power supply parameter of the photovoltaic power supply system is less than the power supply parameter threshold, control the controllable switch on the direct current side to be always on, to connect the electrical connection between the power supply and the inverter unit. The second controller is further configured to: when the power supply parameter of the photovoltaic power supply system is less than the power supply parameter threshold, control the controllable switch on the alternating current side to be turned on or off, to connect or disconnect the electrical connection between the inverter unit and the load.

In an implementation provided in this application, the power supply parameter of the photovoltaic power supply system may identify a working state of the photovoltaic power supply system. When the power supply parameter of the photovoltaic power supply system is less than the power supply parameter threshold, it indicates that the photovoltaic power supply system can work normally. When the power supply parameter of the photovoltaic power supply system is less than the power supply parameter threshold (for example, the photovoltaic power supply system can work normally), the first controller may further control the controllable switch on the direct current side to be always on, to connect the electrical connection between the power supply and the inverter unit. When the power supply parameter of the photovoltaic power supply system is less than the power supply parameter threshold (for example, the photovoltaic power supply system can work normally), the second controller may control the controllable switch on the alternating current side to be turned on, to supply power to the load by using electric energy of the power supply, or the second controller may implement grid-connected power generation when the load is the power grid. When the power supply parameter of the photovoltaic power supply system is less than the power supply parameter threshold (for example, the photovoltaic power supply system can work normally, but the photovoltaic power supply system needs to be power off or work off-grid), the second controller may control the controllable switch on the alternating current side to be turned off, so that the photovoltaic power supply system is in an off-grid state. In this case, the controllable switch on the direct current side may be always on. This can reduce a quantity of operations of turning off the switch and prolong a service life of a component.

With reference to the first aspect, the first possible implementation of the first aspect, or the second possible implementation of the first aspect, in a third possible implementation, the photovoltaic power supply system may further include a communication circuit, and the communication circuit is connected to the first controller and the second controller. The communication circuit herein may be configured to: receive a central control signal of an external central control system and generate a communication instruction, to implement a communication link between the photovoltaic power supply system and the external central control system. The first controller herein may further turn on or off, based on the communication instruction, the controllable switch on the direct current side, to connect or disconnect the electrical connection between the power supply and the inverter unit. The second controller herein may further turn on or off, based on the communication instruction, the controllable switch on the alternating current side, to connect or disconnect the electrical connection between the inverter unit and the load.

In an implementation provided in this application, the photovoltaic power supply system may further include the communication circuit. The communication circuit herein may be integrated into the photovoltaic inverter, or may be independently disposed outside the photovoltaic inverter. A specific layout manner may be determined based on an actual application scenario. The communication circuit herein may be configured to: receive the central control signal of the external central control system and generate the communication instruction (for example, an instruction such as a power-on instruction or a power-off instruction of the photovoltaic power supply system), to implement a communication link between the photovoltaic power supply system and the external central control system. It may be understood that, when the communication circuit receives the central control signal of the external central control system and generates the communication instruction to instruct the photovoltaic power supply system to power on or perform grid connection, the first controller may turn on the controllable switch on the direct current side, and the second controller may turn on the controllable switch on the alternating current side, to connect the electrical connection between the photovoltaic power supply system and the inverter unit and the electrical connection between the inverter unit and the load (or the power grid). It may be further understood that, when the communication circuit receives the central control signal of the external central control system and generates the communication instruction to instruct the photovoltaic power supply system to power off or perform off-grid, the first controller may turn off (or turn on) the controllable switch on the direct current side, and the second controller may turn off the controllable switch on the alternating current side, to disconnect the electrical connections between the photovoltaic power supply system and the load (or the power grid). Further, it may be understood that the communication circuit may be connected between the collector and the controller (for example, the first controller and the second controller). The external central control system may determine a running state of the photovoltaic power supply system based on the power supply parameter of the photovoltaic power supply system collected by the collector, send the corresponding central control signal, and generate and transmit the communication instruction through the communication circuit to the controller (for example, the first controller or the second controller). A specific layout manner and a connection relationship may be determined based on an actual application scenario.

In this application, the photovoltaic inverter may establish a communication link to the external central control system through the communication circuit, generate the communication instruction based on the central control signal of the external central control system, and control the controller (for example, the first controller or the second controller) to perform a corresponding control operation, to control the controllable switch on the direct current side and the controllable switch on the alternating current side to be turned on or off. A structure is simple, and a control manner is diversified, simple, and flexible. This can improve applicability of the photovoltaic power supply system, and enrich the application scenario of the photovoltaic power supply system.

With reference to the first aspect or any one of the first possible implementation of the first aspect to the third possible implementation of the first aspect, in a fourth possible implementation, the load may include the power grid, and the photovoltaic inverter may further include an alternating current auxiliary source. One end of the alternating current auxiliary source is connected to the first controller and the second controller, and the other end of the alternating current auxiliary source is connected to the power grid. The alternating current auxiliary source may supply power to the first controller and/or the second controller based on electric energy provided by the power grid.

In an implementation provided in this application, the load may include the power grid (or another device that can provide electric energy). It may be understood that, in some application scenarios (for example, the photovoltaic power supply system is started in the morning), the alternating current auxiliary source may supply power to the controller (for example, the first controller and/or the second controller) based on the electric energy provided by the power grid. In this way, the controller may control the controllable switch on the direct current side and/or the controllable switch on the alternating current side to be turned on, to connect an electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

With reference to the fourth possible implementation of the first aspect, in a fifth possible implementation, the photovoltaic inverter may further include a first direct current auxiliary source. One end of the first direct current auxiliary source is connected to the power supply, and the other end of the first direct current auxiliary source is connected to the first controller and the second controller. The first direct current auxiliary source herein may supply power to the first controller and/or the second controller based on the electric energy provided by the power supply.

In an implementation provided in this application, the photovoltaic inverter may further include the first direct current auxiliary source. It may be understood that, in some application scenarios (for example, before the photovoltaic power supply system switches from an off-grid working state to a grid-connected working state), the first direct current auxiliary source may supply power to the controller (for example, the first controller and/or the second controller) based on the electric energy provided by the power supply (for example, the photovoltaic panel). In this way, the controller may control the controllable switch on the direct current side and/or a controllable switch on an alternating current side to be turned on, to connect the electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

With reference to the fifth possible implementation of the first aspect, in a sixth possible implementation, the photovoltaic inverter may further include a direct current/direct current (Direct Current/ Direct Current, DC/DC) unit, a direct current bus, and a second direct current auxiliary source. One end of the DC/DC unit is connected to the controllable switch on the direct current side, and the other end of the DC/DC unit is connected to the inverter unit through the direct current bus. One end of the first direct current auxiliary source is connected to the power supply, and the other end of the first direct current auxiliary source is connected to the direct current bus. One end of the second direct current auxiliary source is connected to the direct current bus, and the other end of the second direct current auxiliary source is connected to the first controller and the second controller. The first direct current auxiliary source herein may be further configured to charge the direct current bus based on the electric energy provided by the power supply, to implement soft start of the photovoltaic power supply system. The second direct current auxiliary source herein may be further configured to: when a voltage of the direct current bus is greater than or equal to a voltage threshold, supply power to the first controller and/or the second controller based on electric energy provided by the direct current bus.

In an implementation provided in this application, the photovoltaic inverter may include the DC/DC unit. The DC/DC unit herein may be a voltage converter circuit or a current converter circuit. It may be understood that, in some application scenarios (for example, the photovoltaic power supply system is started in the morning), the first direct current auxiliary source may charge, based on the electric energy provided by the power supply, the direct current bus (for example, a bus capacitor on the direct current bus) between the DC/DC unit and the inverter unit, to increase an output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

With reference to the sixth possible implementation of the first aspect, in a seventh possible implementation, a diode is disposed in the DC/DC unit. One end of the first direct current auxiliary source is connected to the power suppl. The other end of the first direct current auxiliary source is connected to an input end of the diode. An output end of the diode is connected to the direct current bus. The first direct current auxiliary source herein may further charge the direct current bus by using the diode based on the electric energy provided by the power supply.

In an implementation provided in this application, the diode (for example, a freewheeling diode or a bypass diode) may be disposed in the DC/DC unit of the photovoltaic inverter, and the first direct current auxiliary source may be connected to the input end of the diode. It may be understood that, in some application scenarios (for example, the photovoltaic power supply system is started in the morning), the first direct current auxiliary source may charge, based on the electric energy provided by the power supply by using the diode, the direct current bus (for example, the bus capacitor on the direct current bus) between the DC/DC unit and the inverter unit, to increase the output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

With reference to the seventh possible implementation of the first aspect, in an eighth possible implementation, the photovoltaic power supply system may further include a filter capacitor, and the other end of the first direct current auxiliary source is connected to the input end of the diode through the filter capacitor. The first direct current auxiliary source herein may further charge the filter capacitor based on the electric energy provided by the power supply.

In an implementation provided in this application, the photovoltaic power supply system may further include the filter capacitor, to reduce impact of a harmonic generated by the power supply on the DC/DC unit. The first direct current auxiliary source may be connected to the input end of the diode through the filter capacitor. It may be understood that, in some application scenarios (for example, the photovoltaic power supply system is started), the first direct current auxiliary source herein may charge the filter capacitor based on the electric energy provided by the power supply, and charge, by using the diode, the direct current bus (for example, the bus capacitor on the direct current bus) between the DC/DC unit and the inverter unit, to increase the output voltage and an input voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus and the filter capacitor, the output voltage and the input voltage of the DC/DC unit are increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

With reference to any one of the sixth possible implementation to the eighth possible implementation of the first aspect, in a ninth possible implementation, the photovoltaic power supply system may further include a combiner unit, and the power supply is connected to the photovoltaic inverter through the combiner unit.

In an implementation provided in this application, the power supply (for example, the photovoltaic panel) may be a power supply including a single power supply apparatus (for example, a single photovoltaic panel), or may be a power supply including a plurality of power supply apparatuses (for example, a plurality of photovoltaic panels). When the power supply is the single power supply apparatus (for example, the single photovoltaic panel), the single power supply apparatus may be connected to the controllable switch on the direct current side of the photovoltaic inverter through the combiner unit or be directly connected to the controllable switch on the direct current side of the photovoltaic inverter. When the power supply includes the plurality of power supply apparatuses (for example, the plurality of photovoltaic panels), after each power supply apparatus (for example, each photovoltaic panel) is connected to the combiner apparatus for combination, the power supply apparatus may be correspondingly connected to a plurality of controllable switches on the direct current side in the photovoltaic inverter. Alternatively, several power supply apparatuses (for example, several photovoltaic panels) may form one group of power supply apparatuses. After each group of power supply apparatuses is connected to the combiner apparatus for combination, the group of power supply apparatuses may be correspondingly connected to a plurality of controllable switches on the direct current side in the photovoltaic inverter. Alternatively, after all power supply apparatuses (for example, all photovoltaic panels) are connected to the combiner apparatus for combination, all the power supply apparatuses may be connected to the controllable switch on the direct current side in the photovoltaic inverter. The photovoltaic power supply system has diversified functional modules, a flexible connection manner, and strong adaptability.

According to a second aspect, this application provides a control method for a photovoltaic power supply system. The control method is applicable to a photovoltaic inverter that connects a power grid and a load, and is further applicable to the photovoltaic power supply system according to the first aspect or any possible implementation of the first aspect, and the method includes:
A collector obtains a power supply parameter of the photovoltaic power supply system. When the power supply parameter of the photovoltaic power supply system is greater than or equal to a power supply parameter threshold, a first controller turns off a controllable switch on a direct current side, to disconnect an electrical connection between a power supply and an inverter unit. When the power supply parameter of the photovoltaic power supply system is greater than or equal to the power supply parameter threshold, a second controller turns off a controllable switch on an alternating current side, to disconnect an electrical connection between the inverter unit and the load.

In an implementation provided in this application, the collector may obtain the power supply parameter of the photovoltaic power supply system. It may be understood that the collector may be integrated into the photovoltaic inverter, or may exist independently outside the photovoltaic inverter. A specific layout manner may be determined based on an actual application scenario. The power supply parameter herein of the photovoltaic power supply system may identify a working state of the photovoltaic power supply system. When the power supply parameter of the photovoltaic power supply system is greater than or equal to the power supply parameter threshold, it indicates that the photovoltaic power supply system is faulty or is in an abnormal working state. When the power supply parameter of the photovoltaic power supply system is greater than or equal to the power supply parameter threshold, the first controller may turn off the controllable switch on the direct current side, to disconnect the electrical connection between the power supply (for example, a photovoltaic panel) and the inverter unit. When the power supply parameter of the photovoltaic power supply system is greater than or equal to the power supply parameter threshold, the second controller may turn off the controllable switch on the alternating current side, to disconnect the electrical connection between the inverter unit and the load (for example, a power grid and/or an electric device). The controllable switch on the direct current side herein may be a direct current circuit breaker, a direct current isolator, a direct current contactor, or another controllable switch (for example, a partially controllable switch, or a fully controllable switch) applicable to a direct current circuit. The controllable switch on the alternating current side herein may be a relay or another controllable switch (for example, a partially controllable switch, or a fully controllable switch) applicable to an alternating current circuit. The partially controllable switch herein means a switch that may be turned off by the controller or a control circuit. The fully controllable switch herein means a switch that can be turned off or on by the controller or the control circuit. The controllable switch on the direct current side and the controllable switch on the alternating current side herein may be single switch devices, or may be switch circuits, or may be switch groups including a plurality of switch devices or a plurality of switch circuits. For example, the controllable switch on the direct current side (or the controllable switch on the alternating current side) may be formed by connecting one controllable switch to both a positive direct current terminal (or a positive alternating current terminal) and a negative direct current terminal (or a negative alternating current terminal) of the inverter unit. The controllable switch on the direct current side (or the controllable switch on the alternating current side) herein may be a switch group. The first controller (or the second controller) may control, by using different signals, any one or several switches of the controllable switch on the direct current side (or the controllable switch on the alternating current side) to be turned on or off.

In this application, the photovoltaic inverter may control, by using the controller, the controllable switch on the direct current side and the controllable switch on the alternating current side to be turned on or off. The photovoltaic inverter may flexibly disconnect the connection between the power supply and the inverter unit and/or the electrical connection between the inverter unit and the load when a fault occurs in the photovoltaic power supply system. This improves safety of the photovoltaic power supply system, reduces a quantity of switch groups, simplifies the photovoltaic power supply system, and reduces costs. In addition, the photovoltaic inverter may control both the controllable switch on the direct current side and the controllable switch on the alternating current side to be simultaneously turned off when a fault occurs in the photovoltaic power supply system. In this way, an electrical clearance distance (or a creepage distance) in the photovoltaic power supply system meets a safety distance in a safety standard, further improving safety of the photovoltaic power supply system.

With reference to the second aspect, in a first possible implementation, the power supply parameter may include an input current of the inverter unit, an output current of the inverter unit, an input voltage of the inverter unit, and/or an output voltage of the inverter unit. The power supply parameter threshold may include an input current threshold of the inverter unit, an output current threshold of the inverter unit, an input voltage threshold of the inverter unit, and/or an output voltage threshold of the inverter unit. The power supply parameter herein is diversified and flexible, and enriches an application scenario of the photovoltaic power supply system.

With reference to the second aspect or the first possible implementation of the second aspect, in a second possible implementation, after the collector obtains the power supply parameter of the photovoltaic power supply system, the method may further include: When the power supply parameter of the photovoltaic power supply system is less than the power supply parameter threshold, the first controller controls the controllable switch on the direct current side to be always on, to connect the electrical connection between the power supply and the inverter unit. When the power supply parameter of the photovoltaic power supply system is less than the power supply parameter threshold, the second controller controls the controllable switch on the alternating current side to be turned on or off, to connect or disconnect the electrical connection between the inverter unit and the load.

In an implementation provided in this application, the power supply parameter of the photovoltaic power supply system may identify a working state of the photovoltaic power supply system. When the power supply parameter of the photovoltaic power supply system is less than the power supply parameter threshold, it indicates that the photovoltaic power supply system can work normally. When the power supply parameter of the photovoltaic power supply system is less than the power supply parameter threshold (for example, the photovoltaic power supply system can work normally), the first controller may further control the controllable switch on the direct current side to be always on, to connect the electrical connection between the power supply and the inverter unit. When the power supply parameter of the photovoltaic power supply system is less than the power supply parameter threshold (for example, the photovoltaic power supply system can work normally), the second controller may control the controllable switch on the alternating current side to be turned on, to supply power to the load by using electric energy of the power supply, or the second controller may implement grid-connected power generation when the load is the power grid. When the power supply parameter of the photovoltaic power supply system is less than the power supply parameter threshold (for example, the photovoltaic power supply system can work normally, but the photovoltaic power supply system needs to be power off or work off-grid), the second controller may control the controllable switch on the alternating current side to be turned off, so that the photovoltaic power supply system is in an off-grid state. In this case, the controllable switch on the direct current side may be always on. This can reduce a quantity of operations of turning off the switch and prolong a service life of a component.

With reference to the second aspect, the first possible implementation of the second aspect, or the second possible implementation of the second aspect, in a third possible implementation, the photovoltaic power supply system may further include a communication circuit, and the method may further include: The communication circuit receives a central control signal of an external central control system and generates a communication instruction, to implement a communication link between the photovoltaic power supply system and the external central control system. The first controller turns on or off, based on the communication instruction, the controllable switch on the direct current side, to connect or disconnect the electrical connection between the power supply and the inverter unit. The second controller turns on or off, based on the communication instruction, the controllable switch on the alternating current side, to connect or disconnect the electrical connection between the inverter unit and the load.

In an implementation provided in this application, the photovoltaic power supply system may further include the communication circuit. The communication circuit herein may be integrated into the photovoltaic inverter, or may be independently disposed outside the photovoltaic inverter. A specific layout manner may be determined based on an actual application scenario. The communication circuit herein may be configured to: receive the central control signal of the external central control system and generate the communication instruction (for example, an instruction such as a power-on instruction or a power-off instruction of the photovoltaic power supply system), to implement a communication link between the photovoltaic power supply system and the external central control system. It may be understood that, when the communication circuit receives the central control signal of the external central control system and generates the communication instruction to instruct the photovoltaic power supply system to power on or perform grid connection, the first controller may turn on the controllable switch on the direct current side, and the second controller may turn on the controllable switch on the alternating current side, to connect the electrical connection between the photovoltaic power supply system and the inverter unit and the electrical connection between the inverter unit and the load (or the power grid). It may be further understood that, when the communication circuit receives the central control signal of the external central control system and generates the communication instruction to instruct the photovoltaic power supply system to power off or perform off-grid, the first controller may turn off (or turn on) the controllable switch on the direct current side, and the second controller may turn off the controllable switch on the alternating current side, to disconnect the electrical connections between the photovoltaic power supply system and the load (or the power grid). Further, it may be understood that the communication circuit may be connected between the collector and the controller (for example, the first controller and the second controller). The external central control system may determine a running state of the photovoltaic power supply system based on the power supply parameter of the photovoltaic power supply system collected by the collector, send the corresponding central control signal, and generate and transmit the communication instruction through the communication circuit to the controller (for example, the first controller or the second controller). A specific layout manner and a connection relationship may be determined based on an actual application scenario.

In this application, the photovoltaic inverter may establish a communication link to the external central control system through the communication circuit, generate the communication instruction based on the central control signal of the external central control system, and control the controller (for example, the first controller or the second controller) to perform a corresponding control operation, to control the controllable switch on the direct current side and the controllable switch on the alternating current side to be turned on or off. A structure is simple, and a control manner is diversified, simple, and flexible. This can improve applicability of the photovoltaic power supply system, and enrich the application scenario of the photovoltaic power supply system.

With reference to the second aspect or any one of the first possible implementation of the second aspect to the third possible implementation of the second aspect, in a fourth possible implementation, the load may include a power grid, and the photovoltaic inverter may further include an alternating current auxiliary source. After the collector obtains the power supply parameter of the photovoltaic power supply system, the method may further include: The alternating current auxiliary source supplies power to the first controller and/or the second controller based on electric energy provided by the power grid.

In an implementation provided in this application, the load may include the power grid (or another device that can provide electric energy). It may be understood that, in some application scenarios (for example, the photovoltaic power supply system is started in the morning), the alternating current auxiliary source may supply power to the controller (for example, the first controller and/or the second controller) based on the electric energy provided by the power grid. In this way, the controller may control the controllable switch on the direct current side and/or the controllable switch on the alternating current side to be turned on, to connect an electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

With reference to the fourth possible implementation of the second aspect, in a fifth possible implementation, the photovoltaic power supply system may further include a first direct current auxiliary source. After the collector obtains the power supply parameter of the photovoltaic power supply system, the method may further include: The first direct current auxiliary source supplies power to the first controller and/or the second controller based on the electric energy provided by the power supply.

In an implementation provided in this application, the photovoltaic inverter may further include the first direct current auxiliary source. It may be understood that, in some application scenarios (for example, before the photovoltaic power supply system switches from an off-grid working state to a grid-connected working state), the first direct current auxiliary source may supply power to the controller (for example, the first controller and/or the second controller) based on the electric energy provided by the power supply (for example, the photovoltaic panel). In this way, the controller may control the controllable switch on the direct current side and/or the controllable switch on the alternating current side to be turned on, to connect the electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

With reference to the fifth possible implementation of the second aspect, in a sixth possible implementation, the photovoltaic inverter may further include a DC/DC unit, a direct current bus, and a second direct current auxiliary source. After the collector obtains the power supply parameter of the photovoltaic power supply system, the method may further include: The first direct current auxiliary source charges the direct current bus based on the electric energy provided by the power supply, to implement soft start of the photovoltaic power supply system. When a voltage of the direct current bus is greater than or equal to a voltage threshold, the second direct current auxiliary source supplies power to the first controller and/or the second controller based on electric energy provided by the direct current bus.

In an implementation provided in this application, the photovoltaic inverter may include the DC/DC unit. The DC/DC unit herein may be a voltage converter circuit or a current converter circuit. It may be understood that, in some application scenarios (for example, the photovoltaic power supply system is started in the morning), the first direct current auxiliary source may charge, based on the electric energy provided by the power supply, the direct current bus (for example, a bus capacitor on the direct current bus) between the DC/DC unit and the inverter unit, to increase an output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

With reference to the sixth possible implementation of the second aspect, in a seventh possible implementation, a diode is disposed in the DC/DC unit. After the communication circuit receives the central control signal of the external central control system and generates the communication instruction, the method may further include: The first direct current auxiliary source charges the direct current bus by using the diode based on the electric energy provided by the power supply.

In an implementation provided in this application, the diode (for example, a freewheeling diode or a bypass diode) may be disposed in the DC/DC unit of the photovoltaic inverter, and the first direct current auxiliary source may be connected to the input end of the diode. It may be understood that, in some application scenarios (for example, the photovoltaic power supply system is started in the morning), the first direct current auxiliary source may charge, based on the electric energy provided by the power supply by using the diode, the direct current bus (for example, the bus capacitor on the direct current bus) between the DC/DC unit and the inverter unit, to increase the output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

With reference to the seventh possible implementation of the second aspect, in an eighth possible implementation, the photovoltaic power supply system may further include a filter capacitor. After the communication circuit receives the central control signal of the external central control system and generates the communication instruction, the method may further include: The first direct current auxiliary source may further charge the filter capacitor based on the electric energy provided by the power supply.

In an implementation provided in this application, the photovoltaic power supply system may further include the filter capacitor, to reduce impact of a harmonic generated by the power supply on the DC/DC unit. The first direct current auxiliary source may be connected to the input end of the diode through the filter capacitor. It may be understood that, in some application scenarios (for example, the photovoltaic power supply system is started), the first direct current auxiliary source herein may charge the filter capacitor based on the electric energy provided by the power supply, and charge, by using the diode, the direct current bus (for example, the bus capacitor on the direct current bus) between the DC/DC unit and the inverter unit, to increase the output voltage and an input voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus and the filter capacitor, the output voltage and the input voltage of the DC/DC unit are increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

### BRIEF DESCRIPTION OF DRAWINGS

FIG. 1 is a schematic diagram of an application scenario of a photovoltaic power supply system according to an embodiment of this application;
FIG. 2 is a schematic diagram of a structure of a photovoltaic power supply system according to an embodiment of this application;
FIG. 3 is another schematic diagram of a structure of a photovoltaic power supply system according to an embodiment of this application;
FIG. 4a is another schematic diagram of a structure of a photovoltaic power supply system according to an embodiment of this application;
FIG. 4b is another schematic diagram of a structure of a photovoltaic power supply system according to an embodiment of this application;
FIG. 5 is another schematic diagram of a structure of a photovoltaic power supply system according to an embodiment of this application;
FIG. 6 is another schematic diagram of a structure of a photovoltaic power supply system according to an embodiment of this application;
FIG. 7 is another schematic diagram of a structure of a photovoltaic power supply system according to an embodiment of this application;
FIG. 8 is another schematic diagram of a structure of a photovoltaic power supply system according to an embodiment of this application;
FIG. 9 is another schematic diagram of a structure of a photovoltaic power supply system according to an embodiment of this application;
FIG. 10 is another schematic diagram of a structure of a photovoltaic power supply system according to an embodiment of this application; and
FIG. 11 is a schematic flowchart of a control method for a photovoltaic power supply system according to an embodiment of this application.

### DESCRIPTION OF EMBODIMENTS

A photovoltaic power supply system and a control method thereof provided in this application are applicable to different types of electric devices (for example, a power grid, a home device, or an industrial and commercial electric device), and may be applied to the field of user terminals (for example, a mobile phone, a smart device, or a television set) and the field of electric devices such as the automobile field. The photovoltaic power supply system and the control method thereof may be adapted to different application scenarios, such as a power supply scenario of a large-sized electric device (for example, a power grid or an industrial device), a power supply scenario of a small and medium-sized distributed electric device (for example, a vehicle-mounted electric device, or a home electric device), and a power supply scenario of a mobile electric device (for example, a mobile phone or a smart device). The following uses a scenario in which the photovoltaic power supply system supplies power to a power grid as an example for description, and details are not described below again.

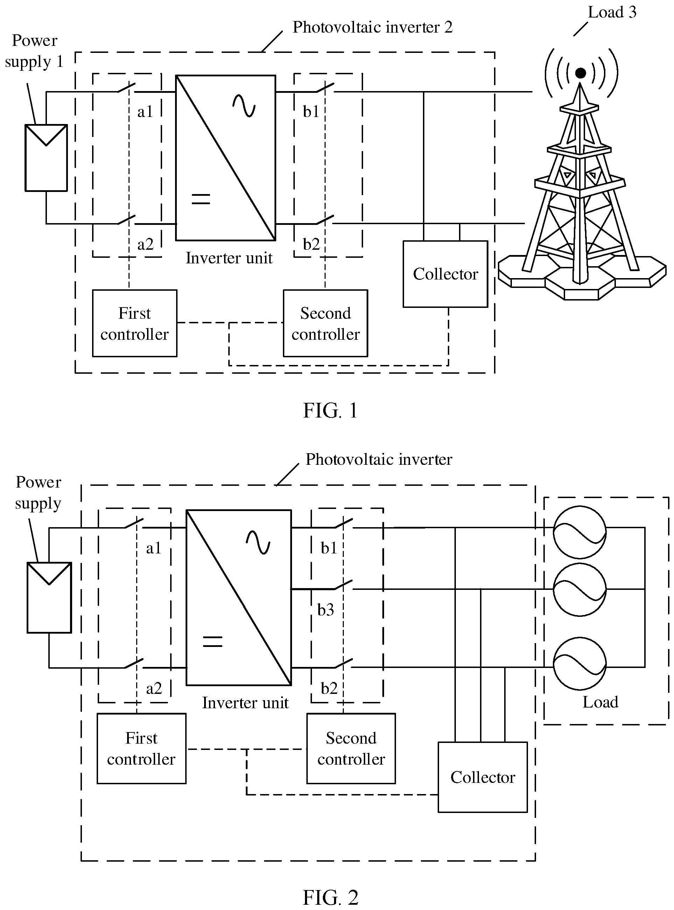

FIG. 1 is a schematic diagram of an application scenario of a photovoltaic power supply system according to an embodiment of this application. As shown in FIG. 1, the photovoltaic power supply system may include a power source 1 (for example, a photovoltaic plate) and a photovoltaic inverter 2. The power supply 1 herein is connected to a load 3 through the photovoltaic inverter 2. In some feasible implementations, the power source 1 may supply power to the load 3 through the photovoltaic inverter 2. In some feasible implementations, the power source 1 may be used as an energy storage apparatus, for example, an energy battery. The load 3 may be used as a power supply device (for example, a power grid). The power source 1 may obtain electric energy provided by the load 3 by using the photovoltaic inverter 2. This application uses an example of an application scenario in which the power source 1 supplies power to the load 3 through the photovoltaic inverter 2. Details are not described below again. It can be understood that, the power supply 1 provided in this application is applicable to application scenarios of supplying power to a plurality of types of electric devices, such as a base station device in an area without mains power or in an area with relatively poor mains power, or a battery, or a home device (such as a refrigerator or an air conditioner). This may be determined based on an actual application scenario, and is not limited herein. It can be further understood that the load 3 in FIG. 1 may include an electric device such as a transmission line, a power transfer station, a battery, a communication base station, or a home device, or a power transmission device. As shown in FIG. 1, the photovoltaic inverter may include a controllable switch on a direct current side (a1 and a2), an inverter unit, a controllable switch on an alternating current side (b1 and b2), a collector, a first controller, and a second controller. The power supply 1 herein may be connected to the inverter unit through the controllable switch on the direct current side. The inverter unit may be connected to the load 3 through the controllable switch on the alternating current side. An input end of the collector may be connected between the inverter unit and the load 3. An output end of the collector may be connected to the first controller and the second controller. The first controller may be connected to the controllable switch on the direct current side. The second controller may be connected to the controllable switch on the alternating current side. It may be understood that the input end of the collector may alternatively be connected between the inverter unit and the power supply 1 (not shown in the figure). For ease of description, this application only uses an example in which the input end of the collector is connected between the inverter unit and the load 3. Details are not described below. The collector herein may obtain a power supply parameter of the photovoltaic power supply system. The power supply parameter herein of the photovoltaic power supply system may identify a working state of the photovoltaic power supply system. When the power supply parameter of the photovoltaic power supply system is greater than or equal to a power supply parameter threshold, it indicates that the photovoltaic power supply system is faulty or is in an abnormal working state. When the power supply parameter of the photovoltaic power supply system is greater than or equal to the power supply parameter threshold, the first controller may turn off the controllable switch on the direct current side, to disconnect the electrical connection between the power supply 1 (for example, a photovoltaic panel) and the inverter unit. When the power supply parameter of the photovoltaic power supply system is greater than or equal to the power supply parameter threshold, the second controller may turn off the controllable switch on the alternating current side, to disconnect an electrical connection between the inverter unit and the load 3 (for example, the power grid and/or the electric device). This improves safety of the photovoltaic power supply system, reduces a quantity of switch groups, simplifies the photovoltaic power supply system, and reduces costs.

With reference to FIG. 2 to FIG. 10, the photovoltaic power supply system provided in this application and a working principle of the photovoltaic power supply system are described below by using examples.

FIG. 2 is a schematic diagram of a structure of a photovoltaic power supply system according to an embodiment of this application. As shown in FIG. 2, the photovoltaic power supply system may include a power supply and a photovoltaic inverter. The photovoltaic inverter may include a controllable switch on a direct current side, an inverter unit, a controllable switch on an alternating current side, a collector, a first controller, and a second controller. The power supply herein may be connected to the inverter unit through the controllable switch on the direct current side. The inverter unit may be connected to a load through the controllable switch on the alternating current side. An input end of the collector may be connected between the inverter unit and the load, and/or the input end of the collector is connected between the inverter unit and the power supply (not shown in the figure). An output end of the collector may be connected to the first controller and the second controller. The first controller may be connected to the controllable switch on the direct current side. The second controller may be connected to the controllable switch on the alternating current side. The collector herein may be configured to obtain a power supply parameter of the photovoltaic power supply system. The first controller herein may be configured to: when the power supply parameter of the photovoltaic power supply system is greater than or equal to a power supply parameter threshold, turn off the controllable switch on the direct current side, to disconnect an electrical connection between the power supply and the inverter unit. The second controller herein may be configured to: when the power supply parameter of the photovoltaic power supply system is greater than or equal to the power supply parameter threshold, turn off the controllable switch on the alternating current side, to disconnect the electrical connection between the inverter unit and the load.

In some feasible implementations, the collector may obtain the power supply parameter of the photovoltaic power supply system. It may be understood that the collector may be integrated into the photovoltaic inverter, or may exist independently outside the photovoltaic inverter. A specific layout manner may be determined based on an actual application scenario. The power supply parameter herein of the photovoltaic power supply system may identify a working state of the photovoltaic power supply system. When the power supply parameter of the photovoltaic power supply system is greater than or equal to the power supply parameter threshold, it indicates that the photovoltaic power supply system is faulty or is in an abnormal working state.

In some feasible implementations, the power supply parameter may include an input current of the inverter unit, an output current of the inverter unit, an input voltage of the inverter unit, and/or an output voltage of the inverter unit. The power supply parameter threshold may include an input current threshold of the inverter unit, an output current threshold of the inverter unit, an input voltage threshold of the inverter unit, and/or an output voltage threshold of the inverter unit. The power supply parameter herein is diversified and flexible, and enriches an application scenario of the photovoltaic power supply system.

When the power supply parameter of the photovoltaic power supply system is greater than or equal to the power supply parameter threshold, the first controller may turn off the controllable switch on the direct current side, to disconnect the electrical connection between the power supply (for example, a photovoltaic panel) and the inverter unit. When the power supply parameter of the photovoltaic power supply system is greater than or equal to the power supply parameter threshold, the second controller may turn off the controllable switch on the alternating current side, to disconnect the electrical connection between the inverter unit and the load (for example, a power grid and/or an electric device). The controllable switch on the direct current side herein may be a direct current circuit breaker, a direct current isolator, a direct current contactor, or another controllable switch (for example, a partially controllable switch, or a fully controllable switch) applicable to a direct current circuit. The controllable switch on the alternating current side herein may be a relay or another controllable switch (for example, a partially controllable switch, or a fully controllable switch) applicable to an alternating current circuit. The partially controllable switch herein means a switch that may be turned off by the controller or a control circuit. The fully controllable switch herein means a switch that can be turned off or on by the controller or the control circuit. The controllable switch on the direct current side and the controllable switch on the alternating current side herein may be single switch devices, or may be switch circuits, or may be switch groups including a plurality of switch devices or a plurality of switch circuits.

In some feasible implementations, as shown in FIG. 1, the controllable switch on the direct current side includes two controllable switches. The power supply is connected to the inverter unit through a controllable switch a1 and a controllable switch a2 that are respectively connected to a positive direct current terminal and a negative direct current terminal of the inverter unit to form the controllable switch on the direct current side. The first controller may separately control, by using different signals, any one or several switches of the controllable switch on the direct current side (a1 and a2) to be turned on or off. The controllable switch on the alternating current side includes two controllable switches. A positive alternating current terminal and a negative alternating current terminal of the inverter unit are connected to the load through the controllable switch on the alternating current side formed by a controllable switch b1 and a controllable switch b2, respectively. The second controller may separately control, by using different signals, any one or any several of switches of the controllable switch on the alternating current side (b1 and b2) to be turned on or off.

In some feasible implementations, the load is a three-phase load. As shown in FIG. 2, the controllable switch on the alternating current side includes three controllable switches. Three-phase alternating current terminals of the inverter unit are connected to the load through the controllable switch on the alternating current side formed by a controllable switch b1, a controllable switch b2, and a controllable switch b3, respectively. The second controller may separately control, by using different signals, any one or any several of switches of the controllable switch on the alternating current side (b1, b2, and b3) to be turned on or off.

In this application, the photovoltaic inverter may control, by using the controller, the controllable switch on the direct current side and the controllable switch on the alternating current side to be turned on or off. The photovoltaic inverter may flexibly disconnect the connection between the power supply and the inverter unit and/or the electrical connection between the inverter unit and the load when a fault occurs in the photovoltaic power supply system. This improves safety of the photovoltaic power supply system, reduces a quantity of switch groups, simplifies the photovoltaic power supply system, and reduces costs. In addition, the photovoltaic inverter may control both the controllable switch on the direct current side and the controllable switch on the alternating current side to be simultaneously turned off when a fault occurs in the photovoltaic power supply system. In this way, an electrical clearance distance (or a creepage distance) in the photovoltaic power supply system meets a safety distance in a safety standard, further improving safety of the photovoltaic power supply system.

In some feasible implementations, the first controller may be further configured to: when the power supply parameter of the photovoltaic power supply system is less than the power supply parameter threshold, control the controllable switch on the direct current side to be always on, to connect the electrical connection between the power supply and the inverter unit. The second controller is further configured to: when the power supply parameter of the photovoltaic power supply system is less than the power supply parameter threshold, control the controllable switch on the alternating current side to be turned on or off, to connect or disconnect the electrical connection between the inverter unit and the load.

In an implementation provided in this application, the power supply parameter of the photovoltaic power supply system may identify a working state of the photovoltaic power supply system. When the power supply parameter of the photovoltaic power supply system is less than the power supply parameter threshold, it indicates that the photovoltaic power supply system can work normally. When the power supply parameter of the photovoltaic power supply system is less than the power supply parameter threshold (for example, the photovoltaic power supply system can work normally), the first controller may further control the controllable switch on the direct current side to be always on, to connect the electrical connection between the power supply and the inverter unit. When the power supply parameter of the photovoltaic power supply system is less than the power supply parameter threshold (for example, the photovoltaic power supply system can work normally), the second controller may control the controllable switch on the alternating current side to be turned on, to supply power to the load by using electric energy of the power supply, or the second controller may implement grid-connected power generation when the load is the power grid. When the power supply parameter of the photovoltaic power supply system is less than the power supply parameter threshold (for example, the photovoltaic power supply system can work normally, but the photovoltaic power supply system needs to be power off or work off-grid), the second controller may control the controllable switch on the alternating current side to be turned off, so that the photovoltaic power supply system is in an off-grid state. In this case, the controllable switch on the direct current side may be always on. This can reduce a quantity of operations of turning off the switch and prolong a service life of a component.

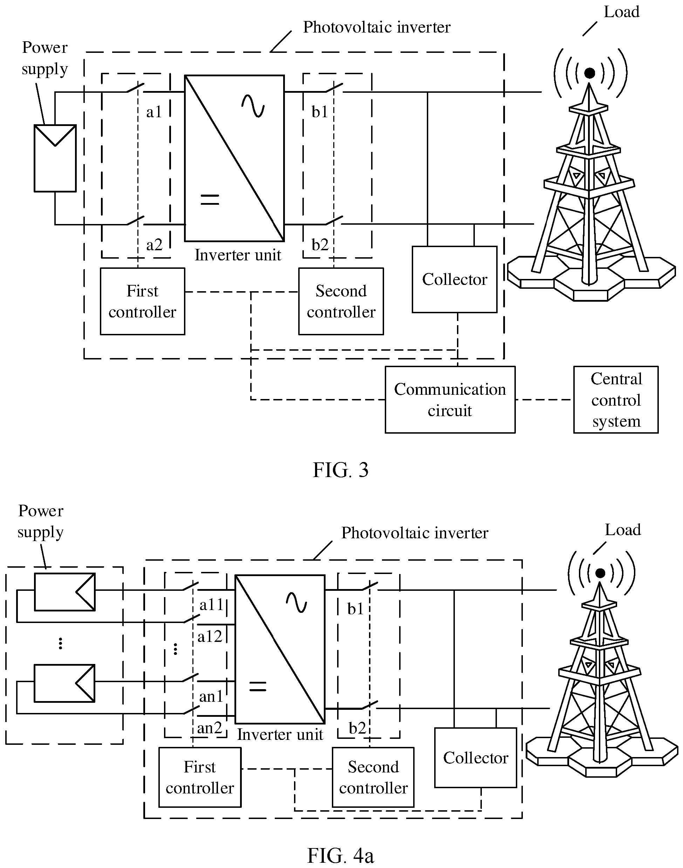

In some feasible implementations, the photovoltaic power supply system may further include a communication circuit. FIG. 3 is another schematic diagram of a structure of a photovoltaic power supply system according to an embodiment of this application. As shown in FIG. 3, a communication circuit is connected to a first controller and a second controller. The communication circuit herein may be configured to: receive a central control signal of an external central control system and generate a communication instruction, to implement a communication link between the photovoltaic power supply system and the external central control system. The first controller herein may further turn on or off, based on the communication instruction, a controllable switch on a direct current side, to connect or disconnect an electrical connection between a power supply and an inverter unit. The second controller herein may further turn on or off, based on the communication instruction, a controllable switch on an alternating current side, to connect or disconnect an electrical connection between the inverter unit and a load.

In an implementation provided in this application, the photovoltaic power supply system may further include the communication circuit. The communication circuit herein may be integrated into a photovoltaic inverter, or may be independently disposed outside a photovoltaic inverter. A specific layout manner may be determined based on an actual application scenario. The communication circuit herein may be configured to: receive the central control signal of the external central control system and generate the communication instruction (for example, an instruction such as a power-on instruction or a power-off instruction of the photovoltaic power supply system), to implement a communication link between the photovoltaic power supply system and the external central control system. It may be understood that, when the communication circuit receives the central control signal of the external central control system and generates the communication instruction to instruct the photovoltaic power supply system to power on or perform grid connection, the first controller may turn on the controllable switch on the direct current side, and the second controller may turn on the controllable switch on the alternating current side, to connect the electrical connection between the photovoltaic power supply system and the inverter unit and the electrical connection between the inverter unit and the load (or the power grid). It may be further understood that, when the communication circuit receives the central control signal of the external central control system and generates the communication instruction to instruct the photovoltaic power supply system to power off or perform off-grid, the first controller may turn off (or turn on) the controllable switch on the direct current side, and the second controller may turn off the controllable switch on the alternating current side, to disconnect the electrical connections between the photovoltaic power supply system and the load (or the power grid). Further, it may be understood that the communication circuit may be connected between the collector and the controller (for example, the first controller and the second controller). The external central control system may determine a running state of the photovoltaic power supply system based on the power supply parameter of the photovoltaic power supply system collected by the collector, send the corresponding central control signal, and generate and transmit the communication instruction through the communication circuit to the controller (for example, the first controller or the second controller). A specific layout manner and a connection relationship may be determined based on an actual application scenario.

In this application, the photovoltaic inverter may establish a communication link to the external central control system through the communication circuit, generate the communication instruction based on the central control signal of the external central control system, and control the controller (for example, the first controller or the second controller) to perform a corresponding control operation, to control the controllable switch on the direct current side and the controllable switch on the alternating current side to be turned on or off. A structure is simple, and a control manner is diversified, simple, and flexible. This can improve applicability of the photovoltaic power supply system, and enrich the application scenario of the photovoltaic power supply system.

In some feasible implementations, the power supply (for example, a photovoltaic panel) may include a plurality of power supply apparatuses (for example, a plurality of photovoltaic panels). For a specific structure and a connection manner of the power supply, refer to FIG. 4a. FIG. 4a is another schematic diagram of a structure of a photovoltaic power supply system according to an embodiment of this application. As shown in FIG. 4a, when a power supply includes a plurality of power supply apparatuses (for example, a plurality of photovoltaic panels), each power supply apparatus (for example, each photovoltaic panel) may be correspondingly connected to a plurality of controllable switch on a direct current side in a photovoltaic inverter. For example, a first photovoltaic panel is connected to a controllable switch a11 and a controllable switch a12, and an n^{th} photovoltaic panel is connected to a controllable switch an1 and a controllable switch an2. The first controller herein may control, by using different signals, any one or several switches of the controllable switch on the direct current side (a11, a12, ..., an1, and an2) to be turned on or off.

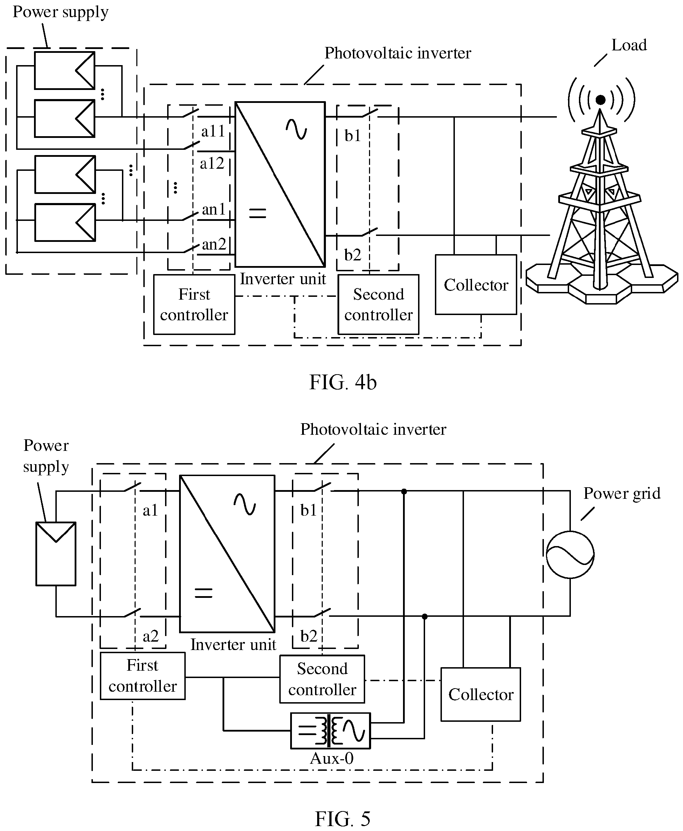

In some feasible implementations, for a specific structure and a connection manner of the power supply, refer to FIG. 4b. FIG. 4b is another schematic diagram of a structure of a photovoltaic power supply system according to an embodiment of this application. As shown in FIG. 4b, when a power supply includes a plurality of power supply apparatuses (for example, a plurality of photovoltaic panels), several power supply apparatuses (for example, several photovoltaic panels) may form one group, and each group of power supply apparatuses is correspondingly connected to a plurality of controllable switches on a direct current side in a photovoltaic inverter. For example, a first group of photovoltaic panels is connected to a controllable switch a11 and a controllable switch a12, and an n^{th} group of photovoltaic panels is connected to a controllable switch an1 and a controllable switch an2. The first controller herein may control, by using different signals, any one or several switches of the controllable switch on the direct current side (a11, a12, ..., an1, and an2) to be turned on or off.

In some feasible implementations, a load may include a power grid (or another device that can provide electric energy), and the photovoltaic inverter may further include an alternating current auxiliary source. FIG. 5 is another schematic diagram of a structure of a photovoltaic power supply system according to an embodiment of this application. As shown in FIG. 5, one end of an alternating current auxiliary source (for example, Aux-0) may be connected to a first controller and a second controller, and the other end of the alternating current auxiliary source (for example, Aux-0) may be connected to a power grid. The alternating current auxiliary source (for example, Aux-0) herein may supply power to the first controller and/or the second controller based on electric energy provided by the power grid. It may be understood that, in some application scenarios (for example, the photovoltaic power supply system is started in the morning), the alternating current auxiliary source (for example, Aux-0) may supply power to the controller (for example, the first controller and/or the second controller) based on the electric energy provided by the power grid. In this way, the controller may control a controllable switch on a direct current side (for example, a1 and a2) and/or a controllable switch on an alternating current side (for example, b1 and b2) to be turned on, to connect an electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

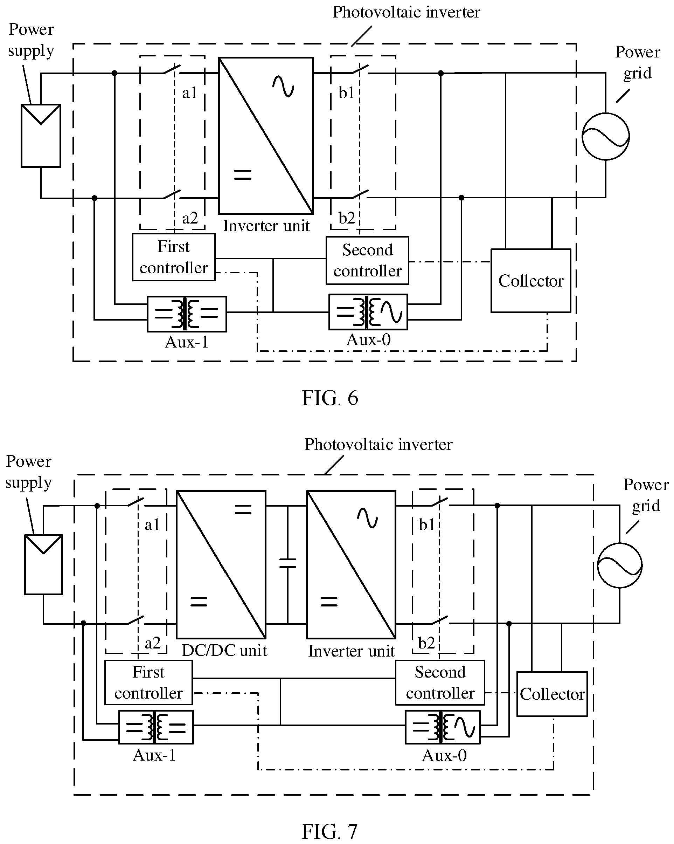

In some feasible implementations, a photovoltaic inverter may further include a first direct current auxiliary source. FIG. 6 is another schematic diagram of a structure of a photovoltaic power supply system according to an embodiment of this application. As shown in FIG. 6, one end of a first direct current auxiliary source (for example, Aux-1) may be connected to a power supply, and the other end of the first direct current auxiliary source (for example, Aux-1) may be connected to a first controller and a second controller. The first direct current auxiliary source (for example, Aux-1) herein may supply power to the first controller and/or the second controller based on electric energy provided by the power supply. It may be understood that, in some application scenarios (for example, before the photovoltaic power supply system switches from an off-grid working state to a grid-connected working state), the first direct current auxiliary source (for example, Aux-1) may supply power to the controller (for example, the first controller and/or the second controller) based on the electric energy provided by the power supply (for example, the photovoltaic panel). In this way, the controller may control a controllable switch on a direct current side (for example, a1 and a2) and/or a controllable switch on an alternating current side (for example, b1 and b2) to be turned on, to connect the electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

In some feasible implementations, a photovoltaic inverter may further include a DC/DC unit and a direct current bus. FIG. 7 is another schematic diagram of a structure of a photovoltaic power supply system according to an embodiment of this application. As shown in FIG. 7, one end of a DC/DC unit may be connected to a controllable switch on a direct current side (for example, a1 and a2), and the other end of the DC/DC unit may be connected to an inverter unit through a direct current bus. One end of a first direct current auxiliary source (for example, Aux-1) may be connected to a power supply, and the other end of the first direct current auxiliary source (for example, Aux-1) may be connected to a first controller and a second controller. One end of a second direct current auxiliary source (for example, Aux-2) may be connected to the direct current bus, and the other end of the second direct current auxiliary source (for example, Aux-2) may be connected to the first controller and the second controller. The DC/DC unit herein may be a voltage converter circuit or a current converter circuit. The DC/DC unit and the inverter unit may implement multi-stage power conversion in a photovoltaic inverter. This enriches an application scenario and improves power supply efficiency.

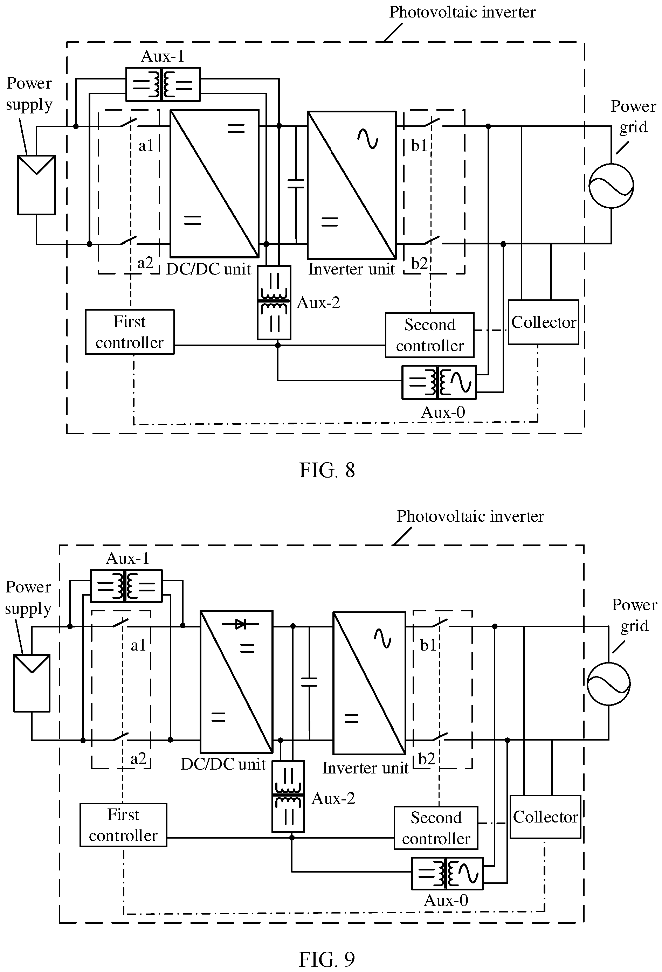

In some feasible implementations, the photovoltaic inverter may further include a second direct current auxiliary source. FIG. 8 is another schematic diagram of a structure of a photovoltaic power supply system according to an embodiment of this application. As shown in FIG. 8, one end of a DC/DC unit may be connected to a controllable switch on a direct current side (for example, a1 and a2), and the other end of the DC/DC unit may be connected to an inverter unit through a direct current bus. One end of a first direct current auxiliary source (for example, Aux-1) may be connected to a power supply, and the other end of the first direct current auxiliary source (for example, Aux-1) may be connected to the direct current bus. One end of a second direct current auxiliary source (for example, Aux-2) may be connected to the direct current bus, and the other end of the second direct current auxiliary source (for example, Aux-2) may be connected to a first controller and a second controller. The first direct current auxiliary source (for example, Aux-1) herein may be further configured to charge the direct current bus based on electric energy provided by the power supply, to implement soft start of the photovoltaic power supply system. The second direct current auxiliary source (for example, Aux-2) herein may be further configured to: when a voltage of the direct current bus is greater than or equal to a voltage threshold, supply power to the first controller and/or the second controller based on electric energy provided by the direct current bus.

It may be understood that, in some application scenarios (for example, the photovoltaic power supply system is started in the morning), the first direct current auxiliary source (for example, Aux-1) may charge, based on the electric energy provided by the power supply, the direct current bus (for example, a bus capacitor on the direct current bus) between the DC/DC unit and the inverter unit, to increase an output voltage of the DC/DC unit. When a voltage of the direct current bus is greater than or equal to a voltage threshold (which may be a preset value, or may be a value calculated by the photovoltaic power supply system), the second direct current auxiliary source (for example, Aux-2) may supply power to the first controller and/or the second controller based on electric energy provided by the direct current bus. In this case, because the first direct current auxiliary source (for example, Aux-1) supplies power to the direct current bus, the output voltage of the DC/DC unit is increased. This can reduce a voltage difference between two sides of the DC/DC unit when the first controller controls a controllable switch on a direct current side (for example, a1 and a2) to be turned on, implement soft start of the photovoltaic power supply system, enrich the application scenario of the photovoltaic power supply system, improve safety of the photovoltaic power supply system, and prolong the service life of the component.

In some feasible implementations, a diode may be disposed in the DC/DC unit. FIG. 9 is another schematic diagram of a structure of a photovoltaic power supply system according to an embodiment of this application. As shown in FIG. 9, one end of a first direct current auxiliary source (for example, Aux-1) may be connected to a power supply, the other end of the first direct current auxiliary source (for example, Aux-1) may be connected to an input end of a diode, and an output end of the diode may be connected to a direct current bus. The first direct current auxiliary source (for example, Aux-1) herein may further charge the direct current bus by using the diode based on electric energy provided by the power supply.

In an implementation provided in this application, the diode (for example, a freewheeling diode or a bypass diode) may be disposed in the DC/DC unit of a photovoltaic inverter, and the first direct current auxiliary source (for example, Aux-1) may be connected to the input end of the diode. It may be understood that, in some application scenarios (for example, the photovoltaic power supply system is started in the morning), the first direct current auxiliary source herein (for example, Aux-1) may charge, by using the diode based on the electric energy provided by the power supply, the direct current bus (for example, a bus capacitor on the direct current bus) between the DC/DC unit and an inverter unit, to increase an output voltage of the DC/DC unit. When a voltage of the direct current bus is greater than or equal to a voltage threshold (which may be a preset value, or may be a value calculated by the photovoltaic power supply system), the second direct current auxiliary source (for example, Aux-2) may supply power to a first controller and/or a second controller based on electric energy provided by the direct current bus. In this case, because the first direct current auxiliary source (for example, Aux-1) supplies power to the direct current bus, the output voltage of the DC/DC unit is increased. This can reduce a voltage difference between two sides of the DC/DC unit when the first controller controls a controllable switch on a direct current side (for example, a1 and a2) to be turned on, implement soft start of the photovoltaic power supply system, enrich the application scenario of the photovoltaic power supply system, improve safety of the photovoltaic power supply system, and prolong the service life of the component.

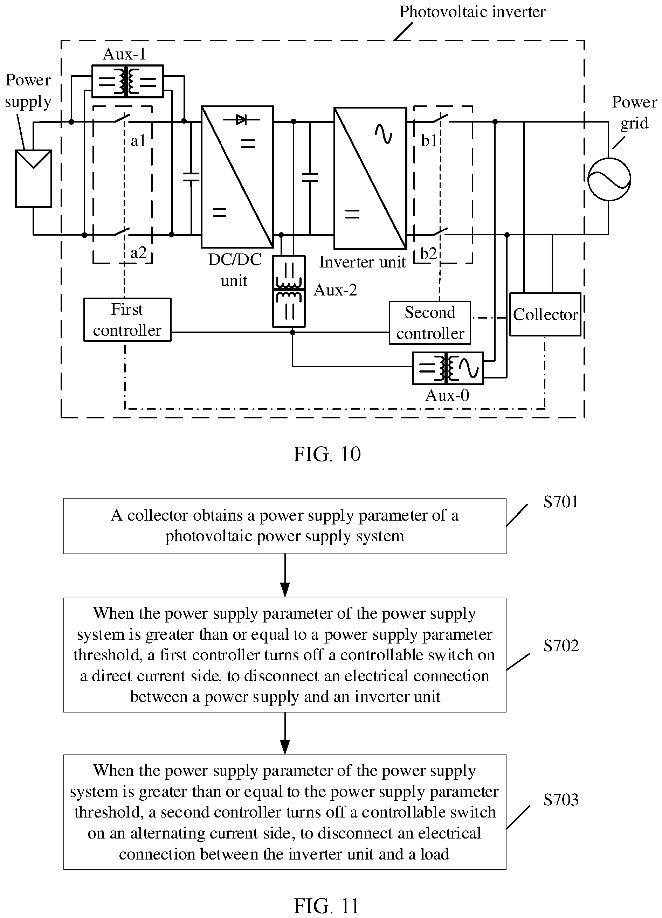

In some feasible implementations, the photovoltaic power supply system may further include a filter capacitor. FIG. 10 is another schematic diagram of a structure of a photovoltaic power supply system according to an embodiment of this application. As shown in FIG. 10, the other end of a first direct current auxiliary source (for example, Aux-1) may be connected to an input end of a diode through a filter capacitor. The first direct current auxiliary source (for example, Aux-1) herein may further charge the filter capacitor based on electric energy provided by a power supply.

In an implementation provided in this application, the photovoltaic power supply system may further include the filter capacitor, to reduce impact of a harmonic generated by the power supply on a DC/DC unit. The first direct current auxiliary source (for example, Aux-1) may be connected to the input end of the diode through the filter capacitor. It may be understood that, in some application scenarios (for example, the photovoltaic power supply system is started), the first direct current auxiliary source (for example, Aux-1) herein may charge the filter capacitor based on the electric energy provided by the power supply, and charge, by using the diode, a direct current bus (for example, a bus capacitor on the direct current bus) between the DC/DC unit and an inverter unit, to increase an output voltage and an input voltage of the DC/DC unit. When a voltage of the direct current bus is greater than or equal to a voltage threshold (which may be a preset value, or may be a value calculated by the photovoltaic power supply system), a second direct current auxiliary source (for example, Aux-2) may supply power to a first controller and/or a second controller based on electric energy provided by the direct current bus. In this case, because the first direct current auxiliary source (for example, Aux-1) supplies power to the direct current bus and the filter capacitor, the output voltage and the input voltage of the DC/DC unit is increased. This can reduce a voltage difference between two sides of the DC/DC unit when the first controller controls a controllable switch on a direct current side (for example, a1 and a2) to be turned on, implement soft start of the photovoltaic power supply system, enrich an application scenario of the photovoltaic power supply system, improve safety of the photovoltaic power supply system, and prolong a service life of a component.

In some feasible implementations, the photovoltaic power supply system may further include a combiner unit, and the power supply is connected to a photovoltaic inverter through the combiner unit. It may be understood that the power supply (for example, a photovoltaic panel) may be a power supply including a single power supply apparatus (for example, a single photovoltaic panel), or may be a power supply including a plurality of power supply apparatuses (for example, a plurality of photovoltaic panels). When the power supply is the single power supply apparatus (for example, the single photovoltaic panel), the single power supply apparatus may be connected to the controllable switch on the direct current side of the photovoltaic inverter through the combiner unit or be directly connected to the controllable switch on the direct current side (for example, a1 and a2) of the photovoltaic inverter. When the power supply includes the plurality of power supply apparatuses (for example, the plurality of photovoltaic panels), after each power supply apparatus (for example, each photovoltaic panel) is connected to the combiner apparatus for combination, the power supply apparatus may be correspondingly connected to a plurality of controllable switches on the direct current side (for example, a1 and a2) in the photovoltaic inverter. Alternatively, several power supply apparatuses (for example, several photovoltaic panels) may form one group of power supply apparatuses. After each group of power supply apparatuses is connected to the combiner apparatus for combination, the group of power supply apparatuses may be correspondingly connected to a plurality of controllable switches on the direct current side (for example, a1 and a2) in the photovoltaic inverter. Alternatively, after all power supply apparatuses (for example, all photovoltaic panels) are connected to the combiner apparatus for combination, all the power supply apparatuses may be connected to the controllable switch on the direct current side (for example, a1 and a2) in the photovoltaic inverter. The photovoltaic power supply system has diversified functional modules, a flexible connection manner, and strong adaptability.

FIG. 11 is a schematic flowchart of a control method for a photovoltaic power supply system according to an embodiment of this application. As shown in FIG. 11, the control method is applicable to the photovoltaic power supply system shown in any one of FIG. 2 to FIG. 10, and the control method includes the following steps.

S701: A collector obtains a power supply parameter of the photovoltaic power supply system.

S702: When the power supply parameter of the photovoltaic power supply system is greater than or equal to a power supply parameter threshold, a first controller turns off a controllable switch on a direct current side, to disconnect an electrical connection between a power supply and an inverter unit.

S703: When the power supply parameter of the photovoltaic power supply system is greater than or equal to the power supply parameter threshold, a second controller turns off a controllable switch on an alternating current side, to disconnect an electrical connection between the inverter unit and a load.

The collector herein may obtain the power supply parameter of the photovoltaic power supply system. It may be understood that the collector may be integrated into a photovoltaic inverter, or may exist independently outside a photovoltaic inverter. A specific layout manner may be determined based on an actual application scenario. The power supply parameter herein of the photovoltaic power supply system may identify a working state of the photovoltaic power supply system. When the power supply parameter of the photovoltaic power supply system is greater than or equal to the power supply parameter threshold, it indicates that the photovoltaic power supply system is faulty or is in an abnormal working state. The power supply parameter herein may include an input current of the inverter unit, an output current of the inverter unit, an input voltage of the inverter unit, and/or an output voltage of the inverter unit. The power supply parameter threshold may include an input current threshold of the inverter unit, an output current threshold of the inverter unit, an input voltage threshold of the inverter unit, and/or an output voltage threshold of the inverter unit. The power supply parameter herein is diversified and flexible, and enriches an application scenario of the photovoltaic power supply system. When the power supply parameter of the photovoltaic power supply system is greater than or equal to the power supply parameter threshold, the first controller may turn off the controllable switch on the direct current side, to disconnect the electrical connection between the power supply (for example, a photovoltaic panel) and the inverter unit. When the power supply parameter of the photovoltaic power supply system is greater than or equal to the power supply parameter threshold, the second controller may turn off the controllable switch on the alternating current side, to disconnect the electrical connection between the inverter unit and the load (for example, a power grid and/or an electric device). The controllable switch on the direct current side herein may be a direct current circuit breaker, a direct current isolator, a direct current contactor, or another controllable switch (for example, a partially controllable switch, or a fully controllable switch) applicable to a direct current circuit. The controllable switch on the alternating current side herein may be a relay or another controllable switch (for example, a partially controllable switch, or a fully controllable switch) applicable to an alternating current circuit. The partially controllable switch herein means a switch that may be turned off by the controller or a control circuit. The fully controllable switch herein means a switch that can be turned off or on by the controller or the control circuit. The controllable switch on the direct current side and the controllable switch on the alternating current side herein may be single switch devices, or may be switch circuits, or may be switch groups including a plurality of switch devices or a plurality of switch circuits. For example, the controllable switch on the direct current side (or the controllable switch on the alternating current side) may be formed by connecting one controllable switch to both a positive direct current terminal (or a positive alternating current terminal) and a negative direct current terminal (or a negative alternating current terminal) of the inverter unit. The controllable switch on the direct current side (or the controllable switch on the alternating current side) herein may be a switch group. The first controller (or the second controller) may control, by using different signals, any one or several switches of the controllable switch on the direct current side (or the controllable switch on the alternating current side) to be turned on or off.

In this application, the photovoltaic inverter may control, by using the controller, the controllable switch on the direct current side and the controllable switch on the alternating current side to be turned on or off. The photovoltaic inverter may flexibly disconnect the connection between the power supply and the inverter unit and/or the electrical connection between the inverter unit and the load when a fault occurs in the photovoltaic power supply system. This improves safety of the photovoltaic power supply system, reduces a quantity of switch groups, simplifies the photovoltaic power supply system, and reduces costs. In addition, the photovoltaic inverter may control both the controllable switch on the direct current side and the controllable switch on the alternating current side to be simultaneously turned off when a fault occurs in the photovoltaic power supply system. In this way, an electrical clearance distance (or a creepage distance) in the photovoltaic power supply system meets a safety distance in a safety standard, further improving safety of the photovoltaic power supply system.

In some feasible implementations, after the collector obtains the power supply parameter of the photovoltaic power supply system in step S701, the method may further include the following:
When the power supply parameter of the photovoltaic power supply system is less than the power supply parameter threshold, the first controller controls the controllable switch on the direct current side to be always on, to connect the electrical connection between the power supply and the inverter unit. When the power supply parameter of the photovoltaic power supply system is less than the power supply parameter threshold, the second controller controls the controllable switch on the alternating current side to be turned on or off, to connect or disconnect the electrical connection between the inverter unit and the load.

In an implementation provided in this application, the power supply parameter of the photovoltaic power supply system may identify a working state of the photovoltaic power supply system. When the power supply parameter of the photovoltaic power supply system is less than the power supply parameter threshold, it indicates that the photovoltaic power supply system can work normally. When the power supply parameter of the photovoltaic power supply system is less than the power supply parameter threshold (for example, the photovoltaic power supply system can work normally), the first controller may further control the controllable switch on the direct current side to be always on, to connect the electrical connection between the power supply and the inverter unit. When the power supply parameter of the photovoltaic power supply system is less than the power supply parameter threshold (for example, the photovoltaic power supply system can work normally), the second controller may control the controllable switch on the alternating current side to be turned on, to supply power to the load by using electric energy of the power supply, or the second controller may implement grid-connected power generation when the load is the power grid. When the power supply parameter of the photovoltaic power supply system is less than the power supply parameter threshold (for example, the photovoltaic power supply system can work normally, but the photovoltaic power supply system needs to be power off or work off-grid), the second controller may control the controllable switch on the alternating current side to be turned off, so that the photovoltaic power supply system is in an off-grid state. In this case, the controllable switch on the direct current side may be always on. This can reduce a quantity of operations of turning off the switch and prolong a service life of a component.

In some feasible implementations, the photovoltaic power supply system may further include a communication circuit, and the method may further include: The communication circuit receives a central control signal of an external central control system and generates a communication instruction, to implement a communication link between the photovoltaic power supply system and the external central control system. The first controller turns on or off, based on the communication instruction, the controllable switch on the direct current side, to connect or disconnect the electrical connection between the power supply and the inverter unit. The second controller turns on or off, based on the communication instruction, the controllable switch on the alternating current side, to connect or disconnect the electrical connection between the inverter unit and the load.

In an implementation provided in this application, the photovoltaic power supply system may further include the communication circuit. The communication circuit herein may be integrated into the photovoltaic inverter, or may be independently disposed outside a photovoltaic inverter. A specific layout manner may be determined based on an actual application scenario. The communication circuit herein may be configured to: receive the central control signal of the external central control system and generate the communication instruction (for example, an instruction such as a power-on instruction or a power-off instruction of the photovoltaic power supply system), to implement a communication link between the photovoltaic power supply system and the external central control system. It may be understood that, when the communication circuit receives the central control signal of the external central control system and generates the communication instruction to instruct the photovoltaic power supply system to power on or perform grid connection, the first controller may turn on the controllable switch on the direct current side, and the second controller may turn on the controllable switch on the alternating current side, to connect the electrical connection between the photovoltaic power supply system and the inverter unit and the electrical connection between the inverter unit and the load (or the power grid). It may be further understood that, when the communication circuit receives the central control signal of the external central control system and generates the communication instruction to instruct the photovoltaic power supply system to power off or perform off-grid, the first controller may turn off (or turn on) the controllable switch on the direct current side, and the second controller may turn off the controllable switch on the alternating current side, to disconnect the electrical connections between the photovoltaic power supply system and the load (or the power grid). Further, it may be understood that the communication circuit may be connected between the collector and the controller (for example, the first controller and the second controller). The external central control system may determine a running state of the photovoltaic power supply system based on the power supply parameter of the photovoltaic power supply system collected by the collector, send the corresponding central control signal, and generate and transmit the communication instruction through the communication circuit to the controller (for example, the first controller or the second controller). A specific layout manner and a connection relationship may be determined based on an actual application scenario.

In this application, the photovoltaic inverter may establish a communication link to the external central control system through the communication circuit, generate the communication instruction based on the central control signal of the external central control system, and control the controller (for example, the first controller or the second controller) to perform a corresponding control operation, to control the controllable switch on the direct current side and the controllable switch on the alternating current side to be turned on or off. A structure is simple, and a control manner is diversified, simple, and flexible. This can improve applicability of the photovoltaic power supply system, and enrich the application scenario of the photovoltaic power supply system.

In some feasible implementations, the load may include a power grid, and the photovoltaic inverter may further include an alternating current auxiliary source. After the collector obtains the power supply parameter of the photovoltaic power supply system in step S701, the method may further include: The alternating current auxiliary source supplies power to the first controller and/or the second controller based on electric energy provided by the power grid.

In an implementation provided in this application, the load may include the power grid (or another device that can provide electric energy). It may be understood that, in some application scenarios (for example, the photovoltaic power supply system is started in the morning), the alternating current auxiliary source may supply power to the controller (for example, the first controller and/or the second controller) based on the electric energy provided by the power grid. In this way, the controller may control the controllable switch on the direct current side and/or the controllable switch on the alternating current side to be turned on, to connect an electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

In some feasible implementations, the photovoltaic power supply system may further include a first direct current auxiliary source. After the collector obtains the power supply parameter of the photovoltaic power supply system in step S701, the method may further include: The first direct current auxiliary source supplies power to the first controller and/or the second controller based on the electric energy provided by the power supply.

In an implementation provided in this application, the photovoltaic inverter may further include the first direct current auxiliary source. It may be understood that, in some application scenarios (for example, before the photovoltaic power supply system switches from an off-grid working state to a grid-connected working state), the first direct current auxiliary source may supply power to the controller (for example, the first controller and/or the second controller) based on the electric energy provided by the power supply (for example, the photovoltaic panel). In this way, the controller may control the controllable switch on the direct current side and/or the controllable switch on the alternating current side to be turned on, to connect the electrical connection between the photovoltaic power supply system and the power grid. A structure is simple, and a control manner is diversified, simple, and flexible. This can improve applicability of the photovoltaic power supply system, and enrich the application scenario of the photovoltaic power supply system.

In some feasible implementations, the photovoltaic inverter may further include a DC/DC unit, a direct current bus, and a second direct current auxiliary source. After the collector obtains the power supply parameter of the photovoltaic power supply system in step S701, the method may further include: The first direct current auxiliary source charges the direct current bus based on the electric energy provided by the power supply, to implement soft start of the photovoltaic power supply system. When a voltage of the direct current bus is greater than or equal to a voltage threshold, the second direct current auxiliary source supplies power to the first controller and/or the second controller based on electric energy provided by the direct current bus.

In an implementation provided in this application, the photovoltaic inverter may include the DC/DC unit. The DC/DC unit herein may be a voltage converter circuit or a current converter circuit. It may be understood that, in some application scenarios (for example, the photovoltaic power supply system is started in the morning), the first direct current auxiliary source may charge, based on the electric energy provided by the power supply, the direct current bus (for example, a bus capacitor on the direct current bus) between the DC/DC unit and the inverter unit, to increase an output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

In some feasible implementations, a diode is disposed in the DC/DC unit. After the communication circuit receives the central control signal of the external central control system and generates the communication instruction, the method may further include: The first direct current auxiliary source charges the direct current bus by using the diode based on the electric energy provided by the power supply.

In an implementation provided in this application, the diode (for example, a freewheeling diode or a bypass diode) may be disposed in the DC/DC unit of the photovoltaic inverter, and the first direct current auxiliary source may be connected to the input end of the diode. It may be understood that, in some application scenarios (for example, the photovoltaic power supply system is started in the morning), the first direct current auxiliary source may charge, based on the electric energy provided by the power supply by using the diode, the direct current bus (for example, the bus capacitor on the direct current bus) between the DC/DC unit and the inverter unit, to increase the output voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus, the output voltage of the DC/DC unit is increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

In some feasible implementations, the photovoltaic power supply system may further include a filter capacitor. After the communication circuit receives the central control signal of the external central control system and generates the communication instruction, the method may further include: The first direct current auxiliary source charges the filter capacitor based on the electric energy provided by the power supply.

In an implementation provided in this application, the photovoltaic power supply system may further include the filter capacitor, to reduce impact of a harmonic generated by the power supply on the DC/DC unit. The first direct current auxiliary source may be connected to the input end of the diode through the filter capacitor. It may be understood that, in some application scenarios (for example, the photovoltaic power supply system is started), the first direct current auxiliary source herein may charge the filter capacitor based on the electric energy provided by the power supply, and charge, by using the diode, the direct current bus (for example, the bus capacitor on the direct current bus) between the DC/DC unit and the inverter unit, to increase the output voltage and an input voltage of the DC/DC unit. When a voltage of the direct current bus is greater than or equal to a voltage threshold (which may be a preset value, or may be a value calculated by the photovoltaic power supply system), the second direct current auxiliary source may supply power to the first controller and/or the second controller based on electric energy provided by the direct current bus. In this case, because the first direct current auxiliary source supplies power to the direct current bus and the filter capacitor, the output voltage and the input voltage of the DC/DC unit are increased. This can reduce a voltage difference between two sides of the DC/DC unit when the first controller controls the controllable switch on the direct current side to be turned on, implement soft start of the photovoltaic power supply system, enrich the application scenario of the photovoltaic power supply system, improve safety of the photovoltaic power supply system, and prolong the service life of the component.

In this application, the photovoltaic inverter may control, by using the controller, the controllable switch on the direct current side and the controllable switch on the alternating current side to be turned on or off. The photovoltaic inverter may flexibly disconnect the connection between the power supply and the inverter unit and/or the electrical connection between the inverter unit and the load when a fault occurs in the photovoltaic power supply system. This improves safety of the photovoltaic power supply system, reduces a quantity of switch groups, simplifies the photovoltaic power supply system, and reduces costs. In addition, the photovoltaic inverter may control both the controllable switch on the direct current side and the controllable switch on the alternating current side to be simultaneously turned off when a fault occurs in the photovoltaic power supply system. In this way, an electrical clearance distance (or a creepage distance) in the photovoltaic power supply system meets a safety distance in a safety standard, further improving safety of the photovoltaic power supply system.

It may be understood that the structures of the photovoltaic power supply system and the photovoltaic inverter, and the control method for the photovoltaic power supply system provided in this application may also be applicable to a power supply system in another field and an inverter of another type. This application only uses the photovoltaic power supply system and the photovoltaic inverter as examples for description. A structure and a control method of the another power supply system or the inverter of the another type also fall within the protection scope covered in this application. Details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photovoltaic power supply system, wherein the photovoltaic power supply system comprises a power supply and a photovoltaic inverter, and the photovoltaic inverter comprises a controllable switch on a direct current side, an inverter unit, a controllable switch on an alternating current side, a collector, a first controller, and a second controller;
the power supply is connected to the inverter unit through the controllable switch on the direct current side, the inverter unit is connected to a load through the controllable switch on the alternating current side, an input end of the collector is connected between the inverter unit and the load, and/or the input end of the collector is connected between the inverter unit and the power supply, an output end of the collector is connected to the first controller and the second controller, the first controller is connected to the controllable switch on the direct current side, and the second controller is connected to the controllable switch on the alternating current side;
the collector is configured to obtain a power supply parameter of the photovoltaic power supply system;
the first controller is configured to: when the power supply parameter of the photovoltaic power supply system is greater than or equal to a power supply parameter threshold, turn off the controllable switch on the direct current side, to disconnect an electrical connection between the power supply and the inverter unit; and
the second controller is configured to: when the power supply parameter of the photovoltaic power supply system is greater than or equal to the power supply parameter threshold, turn off the controllable switch on the alternating current side, to disconnect an electrical connection between the inverter unit and the load.

2. The photovoltaic power supply system according to claim 1, wherein the power supply parameter comprises an input current of the inverter unit, an output current of the inverter unit, an input voltage of the inverter unit, and/or an output voltage of the inverter unit; and the power supply parameter threshold comprises an input current threshold of the inverter unit, an output current threshold of the inverter unit, an input voltage threshold of the inverter unit, and/or an output voltage threshold of the inverter unit.

3. The photovoltaic power supply system according to claim 1 or 2, wherein the first controller is further configured to: when the power supply parameter of the photovoltaic power supply system is less than the power supply parameter threshold, control the controllable switch on the direct current side to be always on, to connect the electrical connection between the power supply and the inverter unit; and
the second controller is further configured to: when the power supply parameter of the photovoltaic power supply system is less than the power supply parameter threshold, control the controllable switch on the alternating current side to be turned on or off, to connect or disconnect the electrical connection between the inverter unit and the load.

4. The photovoltaic power supply system according to any one of claims 1 to 3, wherein the photovoltaic power supply system further comprises a communication circuit, and the communication circuit is connected to the first controller and the second controller;
the communication circuit is configured to: receive a central control signal of an external central control system and generate a communication instruction, to implement a communication link between the photovoltaic power supply system and the external central control system;
the first controller is further configured to turn on or off, based on the communication instruction, the controllable switch on the direct current side, to connect or disconnect the electrical connection between the power supply and the inverter unit; and
the second controller is further configured to turn on or off, based on the communication instruction, the controllable switch on the alternating current side, to connect or disconnect the electrical connection between the inverter unit and the load.

5. The photovoltaic power supply system according to any one of claims 1 to 4, wherein the load comprises a power grid, the photovoltaic inverter further comprises an alternating current auxiliary source, one end of the alternating current auxiliary source is connected to the first controller and the second controller, and the other end of the alternating current auxiliary source is connected to the power grid; and
the alternating current auxiliary source is configured to supply power to the first controller and/or the second controller based on electric energy provided by the power grid.

6. The photovoltaic power supply system according to claim 5, wherein the photovoltaic inverter further comprises a first direct current auxiliary source, one end of the first direct current auxiliary source is connected to the power supply, and the other end of the first direct current auxiliary source is connected to the first controller and the second controller; and
the first direct current auxiliary source is configured to supply power to the first controller and/or the second controller based on electric energy provided by the power supply.

7. The photovoltaic power supply system according to claim 6, wherein the photovoltaic inverter further comprises a DC/DC unit, a direct current bus, and a second direct current auxiliary source, one end of the DC/DC unit is connected to the controllable switch on the direct current side, the other end of the DC/DC unit is connected to the inverter unit through the direct current bus, one end of the first direct current auxiliary source is connected to the power supply, the other end of the first direct current auxiliary source is connected to the direct current bus, one end of the second direct current auxiliary source is connected to the direct current bus, and the other end of the second direct current auxiliary source is connected to the first controller and the second controller;
the first direct current auxiliary source is further configured to charge the direct current bus based on the electric energy provided by the power supply, to implement soft start of the photovoltaic power supply system; and
the second direct current auxiliary source is further configured to: when a voltage of the direct current bus is greater than or equal to a voltage threshold, supply power to the first controller and/or the second controller based on electric energy provided by the direct current bus.

8. The photovoltaic power supply system according to claim 7, wherein a diode is disposed in the DC/DC unit, one end of the first direct current auxiliary source is connected to the power supply, the other end of the first direct current auxiliary source is connected to an input end of the diode, and an output end of the diode is connected to the direct current bus; and
the first direct current auxiliary source is further configured to charge the direct current bus by using the diode based on the electric energy provided by the power supply.

9. The photovoltaic power supply system according to claim 8, wherein the photovoltaic power supply system further comprises a filter capacitor, and the other end of the first direct current auxiliary source is connected to the input end of the diode through the filter capacitor; and
the first direct current auxiliary source is further configured to charge the filter capacitor based on the electric energy provided by the power supply.

10. The photovoltaic power supply system according to any one of claims 7 to 9, wherein the photovoltaic power supply system further comprises a combiner unit, and the power supply is connected to the photovoltaic inverter through the combiner unit.

11. A control method for a photovoltaic power supply system, wherein the control method is applicable to the photovoltaic power supply system according to any one of claims 1 to 10, and the method comprises:
obtaining, by a collector, a power supply parameter of the photovoltaic power supply system;
when the power supply parameter of the photovoltaic power supply system is greater than or equal to a power supply parameter threshold, turning off, by a first controller, a controllable switch on a direct current side, to disconnect an electrical connection between a power supply and an inverter unit; and
when the power supply parameter of the photovoltaic power supply system is greater than or equal to the power supply parameter threshold, turning off, by a second controller, a controllable switch on an alternating current side, to disconnect an electrical connection between the inverter unit and a load.

12. The control method according to claim 11, wherein the power supply parameter comprises an input current of the inverter unit, an output current of the inverter unit, an input voltage of the inverter unit, and/or an output voltage of the inverter unit; and the power supply parameter threshold comprises an input current threshold of the inverter unit, an output current threshold of the inverter unit, an input voltage threshold of the inverter unit, and/or an output voltage threshold of the inverter unit.

13. The control method according to claim 11 or 12, wherein after the obtaining, by a collector, a power supply parameter of the photovoltaic power supply system, the method further comprises:
when the power supply parameter of the photovoltaic power supply system is less than the power supply parameter threshold, controlling, by the first controller, the controllable switch on the direct current side to be always on, to connect the electrical connection between the power supply and the inverter unit; and
when the power supply parameter of the photovoltaic power supply system is less than the power supply parameter threshold, controlling, by the second controller, the controllable switch on the alternating current side to be turned on or off, to connect or disconnect the electrical connection between the inverter unit and the load.

14. The control method according to any one of claims 11 to 13, wherein the photovoltaic power supply system further comprises a communication circuit, and the method further comprises:
receiving, by the communication circuit, a central control signal of an external central control system, and generating a communication instruction, to implement a communication link between the photovoltaic power supply system and the external central control system;
turning on or off, by the first controller based on the communication instruction, the controllable switch on the direct current side, to connect or disconnect the electrical connection between the power supply and the inverter unit; and
turning on or off, by the second controller based on the communication instruction, the controllable switch on the alternating current side, to connect or disconnect the electrical connection between the inverter unit and the load.

15. The control method according to any one of claims 11 to 14, wherein the load comprises a power grid, the photovoltaic inverter further comprises an alternating current auxiliary source, and after the obtaining, by a collector, a power supply parameter of the photovoltaic power supply system, the method further comprises:
supplying, by the alternating current auxiliary source, power to the first controller and/or the second controller based on electric energy provided by the power grid.

16. The control method according to claim 15, wherein the photovoltaic power supply system further comprises a first direct current auxiliary source, and after the obtaining, by a collector, a power supply parameter of the photovoltaic power supply system, the method further comprises:
supplying, by the first direct current auxiliary source, power to the first controller and/or the second controller based on electric energy provided by the power supply.

17. The control method according to claim 16, wherein the photovoltaic inverter further comprises a DC/DC unit, a direct current bus, and a second direct current auxiliary source, and after the obtaining, by a collector, a power supply parameter of the photovoltaic power supply system, the method further comprises:
charging, by the first direct current auxiliary source, the direct current bus based on the electric energy provided by the power supply, to implement soft start of the photovoltaic power supply system; and
when a voltage of the direct current bus is greater than or equal to a voltage threshold, supplying, by the second direct current auxiliary source, power to the first controller and/or the second controller based on electric energy provided by the direct current bus.

18. The control method according to claim 17, wherein a diode is disposed in the DC/DC unit, and after the receiving, by the communication circuit, a central control signal of an external central control system, and generating a communication instruction, the method further comprises:
charging, by the first direct current auxiliary source, the direct current bus by using the diode based on the electric energy provided by the power supply.

19. The control method according to claim 18, wherein the photovoltaic power supply system further comprises a filter capacitor, and after the receiving, by the communication circuit, a central control signal of an external central control system, and generating a communication instruction, the method further comprises:
charging, by the first direct current auxiliary source, the filter capacitor based on the electric energy provided by the power supply.
